# EUROPÄISCHE PATENTSCHRIFT

(11) **EP 0 572 694 B1**
(45) Veröffentlichungstag und Bekanntmachung des Hinweises auf die Patenterteilung: **17.09.1997**
(21) Anmeldenummer: 92109278.9
(22) Anmeldetag: 02.06.1992
(51) Int. Cl.: C09K 3/32, C02F 1/68

(54) **Ölbinder aus Mineralwolle und Bindemittel und Verfahren zu dessen Herstellung**
Oil-absorbent based on mineral wool and binder, and process for its manufacture
Absorbant pour pétrole à base de laine minérale et de liant et procédé de préparation

(43) Veröffentlichungstag der Anmeldung: 08.12.1993
(73) Patentinhaber: DÄMMSTOFFE HELD GmbH & CO. WERK FÜR DÄMMSTOFFE, D-46485 Wesel (DE)
(72) Erfinder: Angenendt, Rainer, c/o Dämmstoffe Held GmbH & Co., W-4230 Wesel 13 (DE)
(74) Vertreter: Kohlmann, Karl Friedrich, Dipl.-Ing.

(56) Entgegenhaltungen:
- FR-A- 2 401 214
- FR-A- 2 457 345
- GB-A- 1 235 463
- GB-A- 1 525 226
- DATABASE WPI Week 7446, Derwent Publications Ltd., London, GB; AN 74-80586V

## Beschreibung

Die vorliegende Erfindung betrifft einen hochverdichteten Ölbinder aus Mineralwolle und Bindemittel und ein Verfahren zur Herstellung dieses hochverdichteten Ölbinders bestehend aus Mineralwolle und Bindemittel.

Zu den an einen Ölbinder zu stellenden Anforderungen gehört eine gute Ölhaltefähigkeit. Das Ölbinder-Ölgemisch ist bei der Bergung, Zwischenlagerung, beim Transport und ggf. auch bei der Deponie hohen Drücken ausgesetzt. Das Öl darf deshalb bei Überdrücken bis zu 0,1 bar (etwa 1 m WS) bei der Prüfung nach dem Ölhaltefähigkeitstest in Nr. 4.7 der Ölbinderrichtlinien "Anforderungen an Ölbinder - überarbeitete Fassung vom 28. Februar 1990" - Bek. d. Bundesministers für Umwelt, Naturschutz und Reaktorsicherheit vom 12. März 1990 (veröffentlicht in "Gemeinsames Ministerialblatt, 1990, 41. Jahrgang, Nr. 18, Seite 335ff) nicht wieder abgegeben werden.

Bis jetzt sind keine Ölbinder auf Basis von Mineralwolle bekannt, die die zuvor genannte Ölbinderrichtlinie erfüllen, insbesondere im Hinblick auf die Anforderung and die Ölhaltefähigkeit.

In der DE-OS 27 38 528 ist ein Ölbinder auf Basis von Mineralwolle und Bindemittel offenbart. Gemäß dem in der DE-OS 27 38 528 offenbarten Verfahren werden Mineralfasern, welche in Form von Gesteinswolle oder Basaltwolle eingesetzt werden können, mit einem Bindemittel versehen, beispielsweise durch Besprühen oder Tränken. Als Bindemittel können Naturharze, Kunstharze und andere beliebige Bindemittel sowie Öle verwendet werden.

Der in der DE-OS 27 38 528 offenbarte Ölbinder erfüllt nicht die Anforderungen an die zuvor genannte Ölbinderrichtlinie. Insbesondere die Ölhaltefähigkeit ist unbefriedigend.

In der DE-OS 27 38 528 ist offenbart, daß der Ölbinder zur Verringerung seines Volumens bei der Lagerung oder nach seiner Verwendung zum Zwecke des Auspressens des Öls und seiner Wiederverwendung zusammengepreßt werden kann.

Bei dem Zusammenpressen des Ölbinders bei der Lagerung behält der Ölbinder gemäß dem Stand der Technik jedoch nicht seine ursprünglichen Eigenschaften bei.

Gemäß den Vorschriften im Hinblick auf die Lagerfähigkeit in Abschnitt 2.1.6 der zuvor genannten Ölbinderrichtlinie dürfen Ölbinder ihre Verwendbarkeit bei einem Lagerdruck entsprechend einer Stapelhöhe bis zu 3.0 m nicht verlieren. Während einer Zeitdauer von 5 Jahren dürfen sich die Eigenschaften des Materials nicht nachteilig ändern.

Bei dem Ölbinder gemäß der DE-OS 27 38 528 tritt jedoch unter Druckbelastung eine Verfilzung der Mineralwolle ein.

Aufgabe der vorliegenden Erfindung ist es deshalb einen Ölbinder, der die Anforderungen an die Ölbinderrichtlinie, insbesondere im Hinblick auf Ölhaltefähigkeit erfüllt, und ein neuartiges Verfahren zur Herstellung dieses Ölbinders zur Verfügung zu stellen.

Diese Aufgabe wird gelöst durch einen Ölbinder bestehend aus einem hochverdichteten Material mit einer Dichte von mindestens 200 g/l aus Flocken oder Granulat auf der Basis von Mineralwolle und Bindemittel.

Vorzugsweise hat das hochverdichtete Material eine Dichte im Bereich von 200 bis 300 g/l, bevorzugter eine Dichte im Bereich von 250 bis 280 g/l, am bevorzugtesten eine Dichte von 260 g/l.

Der erfindungsgemäße Ölbinder wird nach einem Verfahren gewonnen, das dadurch gekennzeichnet ist, daß es die Verfahrensschritte umfaßt:
a) Versehen von Mineralwolle mit einer Bindemittelzusammensetzung,
b) Verdichten der mit der Bindemittelzusammensetzung versehenen Mineralwolle,
c) Granulieren oder Flockenbilden aus der verdichteten Mineralwolle und
d) Trocknen des Granulats oder der Flocken.

Um die hohe Dichte, vorzugsweise im Bereich von 200 bis 300 g/l, bevorzugter im Bereich von 250 bis 280 g/l, am bevorzugtestens 260 g/l, und Festigkeit zu erzielen, wird die Mineralwolle vollständig mit der Bindemittelzusammensetzung versehen, beispielsweise durch Tränken und anschließend verdichtet. Nach der Verdichtung wird granuliert bzw. werden Flocken aus der verdichteten Mineralwolle gebildet. Die Granulatteilchen bzw. Flocken werden getrocknet.

Vorzugsweise umfaßt das Verfahren den zusätzlichen Verfahrensschritt:
e) Sieben des Granulats oder der Flocken auf eine Größe von maximal 4 mm.

Zweckmäßigerweise werden die Flocken bzw. Granulatteilchen in einer Größe im Bereich von 4 bis 0,5 mm hergestellt.

Die Verfahrensstufen des Verdichtens und des Granulierens bzw. des Flockenbildens aus der verdichteten Mineralwolle werden vorzugsweise mit Hilfe einer Schneckenpresse durchgeführt.

Dadurch wird die kugelige Form der Flocken bzw. Granulatteilchen erhalten.

Es gibt keinerlei Beschränkung im Hinblick auf die bei dem erfindungsgemäßen Verfahren einzusetzende Mineralwolle.

Vorzugsweise werden jedoch Naßfaserabfälle, die in den Gaswaschanlagen und in den Wasseraufbereitungsanlagen anfallen, eingesetzt. Diese konnten bisher der Produktion nicht mehr zugeführt werden und mußten als verunreinigende Mineralfaserabfälle zur Sondermülldeponie abtransportiert werden.

Das Verfahren gemäß der Erfindung ist u.a. insofern ökonomisch, als daß eine neue Verwendung für bisherige Abfallstoffe gefunden worden ist.

Auch Mineralwolle in Form von Reißwolle kann bei dem Verfahren gemäß der vorliegenden Erfindung eingesetzt werden.

Vorzugsweise wird Mineralwolle in Form von Glaswolle oder in Form von Abfallstoffen, die bei der Glaswolleproduktion entstehen, bei dem Verfahren gemäß der Erfindung eingesetzt.

Die Glaswolle hat zweckmäßigerweise folgende Zusammensetzung:

| | |
|---|---|
| SiO₂ | 60 - 65 Gew.-% |
| Na₂O | 14 - 18 Gew.-% |
| K₂O | 0,5 - 2 Gew.-% |
| CaO | 5 - 10 Gew.-% |
| MgO | 3 - 8 Gew.-% |
| Fe₂O₃ | < 0,1 Gew.-% |
| Al₂O₃ | 2,5 - 5 Gew.-% |
| B₂O₃ | 3 - 6 Gew.-% |

Die Gesamtzusammensetzung beträgt 100 Gew.-%.

Vorzugsweise hat die Glaswolle folgende Zusammensetzung:

| | |
|---|---|
| SiO₂ | 60 - 63 Gew.-% |
| Na₂O | 14 - 15 Gew.-% |
| K₂O | 1,6 - 2 Gew.-% |
| CaO | 7 - 10 Gew.-% |
| MgO | 5 - 8 Gew.-% |
| Fe₂O₃ | < 0,1 Gew.-% |
| Al₂O₃ | 2,5 - 3 Gew.-% |
| B₂O₃ | 3 - 4 Gew.-% |

Die Gesamtzusammensetzung beträgt 100 Gew.-%.

Im Hinblick auf das Bindemittel gibt es keinerlei Beschränkungen. Zweckmäßigerweise ist jedoch die Bindemittelzusammensetzung, mit der bei dem Verfahren gemäß der Erfindung die Mineralwolle versehen wird, eine wäßriqe Phenolharzlösung, die übliche Zusätze enthalten kann. Gegebenenfalls enthält die wäßrige Phenolharzlösung Zusätze von Harnstoff, Ammoniumsulfat, Staubbindemittelöl, Ammoniak, Amylopektinester und Tensiden.

Vorzugsweise ist die Phenolharzlösung eine 2 Gew.-%-ige wäßrige Phenolharzlösung.

Sollte ein schwimmfähiger Ölbinder hergestellt werden, wird die Mineralwolle mit einer Bindemittelzusammensetzung versehen, die Zusätze von Siliconen und Silanen enthält.

Eine Ausführungsform des Verfahrens zur Herstellung des hochverdichteten Ölbinders ist in der Fig. dargestellt.

Die Mineralwolle wird über ein Förderband (1) in eine mit Bindemittel gefüllte Wanne (2) mit Rührer eingeführt und dort mit dem Bindemittel versehen. Anschließend wird die Mineralwolle in eine Schneckenpresse (3) transportiert, in der die mit der Bindemittelzusammensetzung versehene Mineralwolle verdichtet wird, und es werden in der Schneckenpresse (3) Granulatteilchen oder Flocken aus der mit der Bindemittelzusammensetzung versehenen Mineralwolle gebildet. Diese werden anschließend über ein Förderband (4) in einen Umluftofen (5) geleitet, dort getrocknet und in einer sich daran anschließenden Siebstation (6) gesiebt.

Die bei dem Granulieren bzw. Flockenbilden aus der verdichteten Mineralwolle und beim Sieben anfallenden Reststoffe können dem Verfahren wieder zugeführt werden.

Daher ist das erfindungsgemäße Verfahren u.a. auch in Bezug auf diese Rückführung ökonomisch.

Der erfindungsgemäße Ölbinder zeichnet sich dadurch aus, daß er den Anforderungen an Ölbinder, Bek. d. BMU vom 12. März 1990 entspricht. Insbesondere hat er eine sehr gute Ölhaltefähigkeit.

Die Ölhaltefähigkeit unter Druckbelastung wurde gemäß dem in der Ölbinderrichtlinie "Anforderungen an Ölbinder" vom 28.02.1990 - Bek. d.BMU vom 12.03.1990 (veröffentlicht in "Gemeinsames Ministerialblatt, 1990, 41. Jahrgang, Nr. 18, Seite 335ff) beschriebenen Ölhaltefähigkeitstest nach Abschnitt 4.7 bestimmt.

Ein Ölbinder-Öl-Gemisch wurde in Anlehnung an die Vorschriften für Ölbinder des Typs III nach den Abschnitten Nr. 4.5.2 und 4.5.3 der zuvor genannten "Anforderungen an Ölbinder" in einem Becherglas hergestellt.

Nach einer Kontaktzeit von 1 Stunde wurden 500 ml Ölbinder-Öl-Gemisch in eine Chromatographiesäule - mit Siebplatte als Boden und beweglichem Stempel, Durchmesser 50 mm, Höhe 300 mm, Stempelgewicht 2 kg - entsprechend dem Überdruck von 0,1 bar (1 m/WS) - gefüllt und mit dem Stempel belastet. Da hierbei eine Ölabgabe erfolgte, wurde die Ölbindermenge solange erhöht (Mehrbedarf), bis während der Versuchsdauer von 2 Stunden kein Öl mehr abgegeben wurde.

Der Mehrbedarf an Ölbinder im Belastungsversuch betrug 68 Gew.-%.

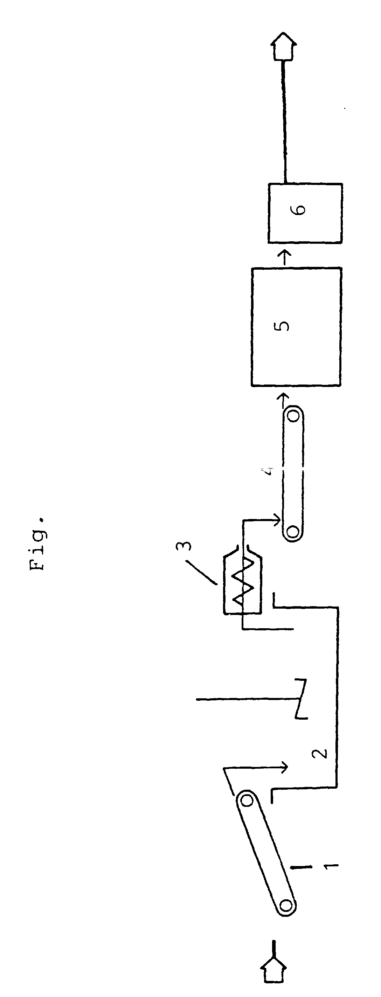

## Patentansprüche (Patentansprüche für folgende(n) Vertragsstaat(en): AT, BE, DE, DK, FR, GB, GR, IT, NL, SE)

1. Ölbinder bestehend aus einem Material mit einer Dichte von mindestens 200 g/l aus Flocken oder Granulat auf der Basis von Mineralwolle und Bindemittel.

2. Ölbinder nach Anspruch 1, dadurch **gekennzeichnet,** daß das hochverdichtete Material eine Dichte im Bereich von 200 bis 300 g/l aufweist.

3. Ölbinder nach Anspruch 2, dadurch **gekennzeichnet,** daß das Material eine Dichte im Bereich von 250 bis 280 g/l aufweist.

4. Ölbinder nach Anspruch 3, dadurch **gekennzeichnet,** daß das Material eine Dichte von 260 g/l hat.

5. Ölbinder nach einem der Ansprüche 1-4, dadurch **gekennzeichnet,** daß die Mineralwolle Glaswolle ist.

6. Ölbinder nach Anspruch 5, dadurch **gekennzeichnet,** daß die Glaswolle folgende Zusammensetzung hat:
| | |
|---|---|
| SiO₂ | 60 - 65 Gew.-% |
| Na₂O | 14 - 18 Gew.-% |
| K₂O | 0,5 - 2 Gew.-% |
| CaO | 5 - 10 Gew.-% |
| MgO | 3 - 8 Gew.-% |
| Fe₂O₃ | < 0,1 Gew.-% |
| Al₂O₃ | 2,5 - 5 Gew.-% |
| B₂O₃ | 3 - 6 Gew.-% |
wobei die Gesamtzusammensetzung 100 Gew.-% beträgt.

7. Ölbinder nach Anspruch 6, dadurch **gekennzeichnet,** daß die Glaswolle folgende Zusammensetzung hat:
| | |
|---|---|
| SiO₂ | 60 - 63 Gew.-% |
| Na₂O | 14 - 15 Gew.-% |
| K₂O | 1,6 - 2 Gew.-% |
| CaO | 7 - 10 Gew.-% |
| MgO | 5 - 8 Gew.-% |
| Fe₂O₃ | < 0,1 Gew.-% |
| Al₂O₃ | 2,5 - 3 Gew.-% |
| B₂O₃ | 3 - 4 Gew.-% |
wobei die Gesamtzusammensetzung 100 Gew.-% beträgt.

8. Ölbinder nach einem der Ansprüche 1-7, dadurch **gekennzeichnet,** daß das Bindemittel ein Bindemittel auf Phenolharzbasis ist.

9. Ölbinder nach Anspruch 8, dadurch **gekennzeichnet,** daß das Bindemittel ein Bindemittel auf Phenolharzbasis mit Zusätzen von Siliconen und Silanen ist.

10. Verfahren zur Herstellung eines Ölbinders gemäß den Ansprüchen 1-9, dadurch **gekennzeichnet,** daß das Verfahren die Verfahrensschritte umfaßt:
a) Versehen von Mineralwolle mit einer Bindemittelzusammensetzung,
b) Verdichten der mit der Bindemittelzusammensetzung versehenen Mineralwolle,
c) Granulieren oder Flockenbilden aus der verdichteten Mineralwolle und
d) Trocknen des Granulats oder der Flocken.

11. Verfahren nach Anspruch 10, dadurch **gekennzeichnet,** daß die Mineralwolle in Form von Naßfaserabfällen verwendet wird.

12. Verfahren nach Anspruch 10 oder 11, dadurch **gekennzeichnet,** daß das Versehen der Mineralwolle mit der Bindemittelzusammensetzung durch Tränken der Mineralwolle mit der Bindemittelzusammensetzung und das Verdichten der mit der Bindemittelzusammensetzung versehenen Mineralwolle durch Verdichten in einer Schreckenpresse durchgeführt werden, woran sich der Verfahrensschritt des Granulierens oder Flockenbildens aus der verdichteten Mineralwolle mittels der Schreckenpresse anschließt.

13. Verfahren nach einem der Ansprüche 10 bis 12, dadurch **gekennzeichnet,** daß das Verfahren den zusätzlichen Verfahrensschritt umfaßt:
e) Sieben des Granulats oder der Flocken auf eine Größe von maximal 4 mm.

14. Verfahren nach einem der Ansprüche 10 bis 12, dadurch **gekennzeichnet,** daß im Verfahrensschritt a) die Mineralwolle mit einer wäßrigen Phenolharzlösung als Bindemittel, die gegebenenfalls Zusätze von Harnstoff, Ammoniumsulfat, Staubbindemittelöl, Ammoniak, Amylopektinester und Tensiden enthält, versehen wird.

15. Verfahren nach Anspruch 14, dadurch **gekennzeichnet,** daß im Verfahrensschritt a) die Mineralwolle mit einer wäßrigen Phenolharzlösung versehen wird, die Zusätze von Siliconen und Silanen enthält.

16. Verfahren nach Anspruch 14 oder 15, dadurch **gekennzeichnet,** daß im Verfahrensschritt a) die Mineralwolle mit einer 2 Gew.-% wäßrigen Phenolharzlösung versehen wird.

## Patentansprüche (Patentansprüche für folgende(n) Vertragsstaat(en): ES)

1. Ölbinder bestehend aus einem Material mit einer Dichte von mindestens 200 g/l aus Flocken oder Granulat auf der Basis von Mineralwolle und Bindemittel.

2. Ölbinder nach Anspruch 1, dadurch **gekennzeichnet,** daß das hochverdichtete Material eine Dichte im Bereich von 200 bis 300 g/l aufweist.

3. Ölbinder nach Anspruch 2, dadurch **gekennzeichnet,** daß das Material eine Dichte im Bereich von 250 bis 280 g/l aufweist.

4. Ölbinder nach Anspruch 3, dadurch **gekennzeichnet,** daß das Material eine Dichte von 260 g/l hat.

5. Ölbinder nach einem der Ansprüche 1-4, dadurch **gekennzeichnet,** daß die Mineralwolle Glaswolle ist.

6. Ölbinder nach Anspruch 5, dadurch **gekennzeichnet,** daß die Glaswolle folgende Zusammensetzung hat:
| | |
|---|---|
| SiO₂ | 60 - 65 Gew.-% |
| Na₂O | 14 - 18 Gew.-% |
| K₂O | 0,5 - 2 Gew.-% |
| CaO | 5 - 10 Gew.-% |
| MgO | 3 - 8 Gew.-% |
| Fe₂O₃ | < 0,1 Gew.-% |
| Al₂O₃ | 2,5 - 5 Gew.-% |
| B₂O₃ | 3 - 6 Gew.-% |
wobei die Gesamtzusammensetzung 100 Gew.-% beträgt.

7. Ölbinder nach Anspruch 6, dadurch **gekennzeichnet,** daß die Glaswolle folgende Zusammensetzung hat:
| | |
|---|---|
| SiO₂ | 60 - 63 Gew.-% |
| Na₂O | 14 - 15 Gew.-% |
| K₂O | 1,6 - 2 Gew.-% |
| CaO | 7 - 10 Gew.-% |
| MgO | 5 - 8 Gew.-% |
| Fe₂O₃ | < 0,1 Gew.-% |
| Al₂O₃ | 2,5 - 3 Gew.-% |
| B₂O₃ | 3 - 4 Gew.-% |
wobei die Gesamtzusammensetzung 100 Gew.-% beträgt.

8. Ölbinder nach einem der Ansprüche 1-7, dadurch **gekennzeichnet,** daß das Bindemittel ein Bindemittel auf Phenolharzbasis ist.

9. Ölbinder nach Anspruch 8, dadurch **gekennzeichnet,** daß das Bindemittel ein Bindemittel auf Phenolharzbasis mit Zusätzen von Siliconen und Silanen ist.

10. Verfahren zur Herstellung eines Ölbinders bestehend aus einem Material mit einer Dichte von mindestens 200 g/l aus Flocken oder Granulat auf der Basis von Mineralwolle und Bindemittel, dadurch **gekennzeichnet,** daß das Verfahren die Verfahrensschritte umfaßt:
a) Versehen von Mineralwolle mit einer Bindemittelzusammensetzung,
b) Verdichten der mit der Bindemittelzusammensetzung versehenen Mineralwolle,
c) Granulieren oder Flockenbilden aus der verdichteten Mineralwolle und
d) Trocknen des Granulats oder der Flocken.

11. Verfahren nach Anspruch 10, dadurch **gekennzeichnet,** daß die Mineralwolle in Form von Naßfaserabfällen verwendet wird.

12. Verfahren nach Anspruch 10 oder 11, dadurch **gekennzeichnet,** daß das Versehen der Mineralwolle mit der Bindemittelzusammensetzung durch Tränken der Mineralwolle mit der Bindemittelzusammensetzung und das Verdichten der mit der Bindemittelzusammensetzung versehenen Mineralwolle durch Verdichten in einer Schreckenpresse durchgeführt werden, woran sich der Verfahrensschritt des Granulierens oder Flockenbildens aus der verdichteten Mineralwolle mittels der Schreckenpresse anschließt.

13. Verfahren nach einem der Ansprüche 10 bis 12, dadurch **gekennzeichnet,** daß das Verfahren den zusätzlichen Verfahrensschritt umfaßt:
e) Sieben des Granulats oder der Flocken auf eine Größe von maximal 4 mm.

14. Verfahren nach einem der Ansprüche 10 bis 12, dadurch **gekennzeichnet,** daß im Verfahrensschritt a) die Mineralwolle mit einer wäßrigen Phenolharzlösung als Bindemittel, die gegebenenfalls Zusätze von Harnstoff, Ammoniumsulfat, Staubbindemittelöl, Ammoniak, Amylopektinester und Tensiden enthält, versehen wird.

15. Verfahren nach Anspruch 14, dadurch **gekennzeichnet,** daß im Verfahrensschritt a) die Mineralwolle mit einer wäßrigen Phenolharzlösung versehen wird, die Zusätze von Siliconen und Silanen enthält.

16. Verfahren nach Anspruch 14 oder 15, dadurch **gekennzeichnet,** daß im Verfahrensschritt a) die Mineralwolle mit einer 2 Gew.-% wäßrigen Phenolharzlösung versehen wird.

## Claims (Claims for the following Contracting State(s): AT, BE, DE, DK, FR, GB, GR, IT, NL, SE)

1. Oil binder consisting of a material having a density of at least 200 g/l of flakes or granules based on mineral wool and binder.

2. Oil binder according to claim 1, characterised in that the highly compacted material has a density in the region of 200 to 300 g/l.

3. Oil binder according to claim 2, characterised in that the material has a density in the region of 250 to 280 g/l.

4. Oil binder according to claim 3, characterised in that the material has a density of 260 g/l.

5. Oil binder according to one of claims 1-4, characterised in that the mineral wool is glass wool.

6. Oil binder according to claim 5, characterised in that the glass wool has the following composition:
| | |
|---|---|
| SiO₂ | 60 - 65 wt.% |
| Na₂O | 14 - 18 wt.% |
| K₂O | 0.5 - 2 wt.% |
| CaO | 5 - 10 wt.% |
| MgO | 3 - 8 wt.% |
| Fe₂O₃ | < 0.1 wt.% |
| Al₂O₃ | 2.5 - 5 wt.% |
| B₂O₃ | 3 - 6 wt.% |
wherein the total composition is 100 wt.%.

7. Oil binder according to claim 6, characterised in that the glass wool has the following composition:
| | |
|---|---|
| SiO₂ | 60 - 63 wt.% |
| Na₂O | 14 - 15 wt.% |
| K₂O | 1.6 - 2 wt.% |
| CaO | 7 - 10 wt.% |
| MgO | 5 - 8 wt.% |
| Fe₂O₃ | < 0.1 wt.% |
| Al₂O₃ | 2.5 - 3 wt.% |
| B₂O₃ | 3 - 4 wt.% |
wherein the total composition is 100 wt.%.

8. Oil binder according to one of claims 1-7, characterised in that the binder is a binder based on phenolic resin.

9. Oil binder according to claim 8, characterised in that the binder is a binder based on phenolic resin with additives of silicones and silanes.

10. Process for producing an oil binder according to claims 1-9, characterised in that the process comprises the process steps:
a) provision of mineral wool with a binder composition,
b) compacting the mineral wool provided with the binder composition,
c) granulating or forming flakes from the compacted mineral wool, and
d) drying the granules or the flakes.

11. Process according to claim 10, characterised in that the mineral wool is used in the form of wet-fibre waste.

12. Process according to claim 10 or 11, characterised in that provision of the mineral wool with the binder composition is carried out by impregnating the mineral wool with the binder composition and compacting of the mineral wool provided with the binder composition is carried out by compacting in a screw extruder, after which follows the process step of granulating or forming flakes from the compacted mineral wool by means of the screw extruder.

13. Process according to one of claims 10 to 12, characterised in that the process comprises the additional process step:
e) sifting the granules or the flakes to a size of 4 mm maximum.

14. Process according to one of claims 10 to 12, characterised in that in process step a) the mineral wool is provided with an aqueous phenolic resin solution as binder which optionally contains additives of urea, ammonium sulphate, dust binder oil, ammonia, amylopectin ester and surfactants.

15. Process according to claim 14, characterised in that in process step a) the mineral wool is provided with an aqueous phenolic resin solution which contains additives of silicones and silanes.

16. Process according to claim 14 or 15, characterised in that in process step a) the mineral wool is provided with a 2 wt.% aqueous phenolic resin solution.

## Claims (Claims for the following Contracting State(s): ES)

1. Oil binder consisting of a material having a density of at least 200 g/l of flakes or granules based on mineral wool and binder.

2. Oil binder according to claim 1, characterised in that the highly compacted material has a density in the region of 200 to 300 g/l.

3. Oil binder according to claim 2, characterised in that the material has a density in the region of 250 to 280 g/l.

4. Oil binder according to claim 3, characterised in that the material has a density of 260 g/l.

5. Oil binder according to one of claims 1-4, characterised in that the mineral wool is glass wool.

6. Oil binder according to claim 5, characterised in that the glass wool has the following composition:
| | |
|---|---|
| SiO₂ | 60 - 65 wt.% |
| Na₂O | 14 - 18 wt.% |
| K₂O | 0.5 - 2 wt.% |
| CaO | 5 - 10 wt.% |
| MgO | 3 - 8 wt.% |
| Fe₂O₃ | < 0.1 wt.% |
| Al₂O₃ | 2.5 - 5 wt.% |
| B₂O₃ | 3 - 6 wt.% |
wherein the total composition is 100 wt.%.

7. Oil binder according to claim 6, characterised in that the glass wool has the following composition:
| | |
|---|---|
| SiO₂ | 60 - 63 wt.% |
| Na₂O | 14 - 15 wt.% |
| K₂O | 1.6 - 2 wt.% |
| CaO | 7 - 10 wt.% |
| MgO | 5 - 8 wt.% |
| Fe₂O₃ | < 0.1 wt.% |
| Al₂O₃ | 2.5 - 3 wt.% |
| B₂O₃ | 3 - 4 wt.% |
wherein the total composition is 100 wt.%.

8. Oil binder according to one of claims 1-7, characterised in that the binder is a binder based on phenolic resin.

9. Oil binder according to claim 8, characterised in that the binder is a binder based on phenolic resin with additives of silicones and silanes.

10. Process for producing an oil binder consisting of a material having a density of at least 200 g/l of flakes or granules based on mineral wool and binder, characterised in that the process comprises the process steps:
a) provision of mineral wool with a binder composition,
b) compacting the mineral wool provided with the binder composition,
c) granulating or forming flakes from the compacted mineral wool, and
d) drying the granules or the flakes.

11. Process according to claim 10, characterised in that the mineral wool is used in the form of wet-fibre waste.

12. Process according to claim 10 or 11, characterised in that provision of the mineral wool with the binder composition is carried out by impregnating the mineral wool with the binder composition and compacting of the mineral wool provided with the binder composition is carried out by compacting in a screw extruder, after which follows the process step of granulating or forming flakes from the compacted mineral wool by means of the screw extruder.

13. Process according to one of claims 10 to 12, characterised in that the process comprises the additional process step:
e) sifting the granules or the flakes to a size of 4 mm maximum.

14. Process according to one of claims 10 to 12, characterised in that in process step a) the mineral wool is provided with an aqueous phenolic resin solution as binder which optionally contains additives of urea, ammonium sulphate, dust binder oil, ammonia, amylopectin ester and surfactants.

15. Process according to claim 14, characterised in that in process step a) the mineral wool is provided with an aqueous phenolic resin solution which contains additives of silicones and silanes.

16. Process according to claim 14 or 15, characterised in that in process step a) the mineral wool is provided with a 2 wt.% aqueous phenolic resin solution.

## Revendications (Revendications pour l'(les) Etat(s) contractant(s) suivant(s): AT, BE, DE, DK, FR, GB, GR, IT, NL, SE)

1. Absorbant pour pétrole, constitué d'un matériau ayant une densité d'au moins 200 g par litre, constitué de flocons ou de granulé à base de laine minérale et d'un liant.

2. Absorbant pour pétrole selon la revendication 1, caractérisé en ce que le matériau fortement compacté présente une densité comprise dans la plage allant de 200 à 300 g par litre.

3. Absorbant pour pétrole selon la revendication 2, caractérisé en ce que le matériau présente une densité comprise dans la plage allant de 250 à 280 g par litre.

4. Absorbant pour pétrole selon la revendication 3, caractérisé en ce que le matériau a une densité de 260 g par litre.

5. Absorbant pour pétrole selon l'une des revendications 1 à 4, caractérisé en ce que la laine minérale est de la laine de verre.

6. Absorbant pour pétrole selon la revendication 2, caractérisé en ce que la laine de verre présente la composition ci-après :
| | |
|---|---|
| SiO₂ | 60 à 65 % en poids |
| Na₂O | 14 à 18 % en poids |
| K₂O | 0,5 à 2 % en poids |
| CaO | 5 à 10 % en poids |
| MgO | 3 à 8 % en poids |
| Fe₂O₃ | < 0,1 % en poids |
| Al₂O₃ | 2,5 à 5 % en poids |
| B₂O₃ | 3 à 6 % en poids |
La composition totale correspondant à 100 % en poids.

7. Absorbant pour pétrole selon la revendication 6, caractérisé en ce que la laine de verre présente la composition ci-après :
| | |
|---|---|
| SiO₂ | 60 à 63 % en poids |
| Na₂O | 14 à 15 % en poids |
| K₂O | 1,6 à 2 % en poids |
| CaO | 7 à 10 % en poids |
| MgO | 5 à 8 % en poids |
| Fe₂O₃ | < 0,1 % en poids |
| Al₂O₃ | 2,5 à 3 % en poids |
| B₂O₃ | 3 à 4 % en poids |
La composition totale correspondant à 100 % en poids.

8. Absorbant pour pétrole selon l'une des revendications 1 à 7 , caractérisé en ce que le liant est un liant à base de résine phénolique.

9. Absorbant pour pétrole selon la revendication 8, caractérisé en ce que le liant est un liant à base de résine phénolique, avec des additifs constitués de silicones et de silanes.

10. Procédé de fabrication d'un absorbant pour pétrole selon les revendications 1 à 9, caractérisé en ce que le procédé comprend les étapes de procédé ci-après :
a) fourniture de laine minérale, avec une composition de liant,
b) compactage de laine minérale pourvue de la composition de liant,
c) granulation ou floculation à partir de la laine minérale compactée, et
d) séchage du granulé ou des flocons.

11. Procédé de fabrication de pétrole selon la revendication 10, caractérisé en ce que la laine minérale est utilisée sous la forme de déchets de fibres humides.

12. Procédé de fabrication de pétrole selon la revendication 10 ou 11, caractérisé en ce que l'étape de fournir la laine minérale avec une composition en liant est efféctuée par imprégnation de la laine minérale avec la composition de liant et le compactage de laine minérale pourvue de la composition en liant est effectué par compression dans une presse à vis, à la suite de quoi est conduite l'étape de procédés de granulation ou de floculation à partir de laine minérale compactée, au moyen de la presse à vis.

13. Procédé selon l'une des revendications 10 à 12, caractérisé en ce que le procédé comprend l'étape de procédé supplémentaire consistant à :
e) filtrer par tamisage le granulat ou les flocons, sur le critère d'une taille maximale de 4mm.

14. Procédé selon l'une des revendication 10 à 12, caractérisé en ce que dans l'étape de procédé a) la laine minérale est pourvue d'une solution de résine phénolique aqueuse faisant office de liant, qui contient le cas échéant des additifs constitués d'urée, sulfate d'ammonium, huile servant de liant à de la poussière, ammoniaque, amilopectine esther et tensio-actifs.

15. Procédé selon la revendication 14, caractérisé en ce que, à l'étape de procédé a), la laine minérale est pourvue d'une solution de résine phénolique aqueuse qui contient comme additifs des silicones et des silanes.

16. Procédé selon la revendication 14 ou la revendication 15, caractérisé en ce qu'elle est étape de procédé a), la laine minérale est pourvue d'une solution de résine phénolique aqueuse à raison de 2 % en poids.

## Revendications (Revendications pour l'(les) Etat(s) contractant(s) suivant(s): ES)

1. Absorbant pour pétrole, constitué d'un matériau ayant une densité d'au moins 200 g par litre, constitué de flocons ou de granulé à base de laine minérale et d'un liant.

2. Absorbant pour pétrole selon la revendication 1, caractérisé en ce que le matériau fortement compacté présente une densité comprise dans la plage allant de 200 à 300 g par litre.

3. Absorbant pour pétrole selon la revendication 2, caractérisé en ce que le matériau présente une densité comprise dans la plage allant de 250 à 280 g par litre.

4. Absorbant pour pétrole selon la revendication 3, caractérisé en ce que le matériau a une densité de 260 g par litre.

5. Absorbant pour pétrole selon l'une des revendications 1 à 4, caractérisé en ce que la laine minérale est de la laine de verre.

6. Absorbant pour pétrole selon la revendication 2, caractérisé en ce que la laine de verre présente la composition ci-après :
| | |
|---|---|
| SiO₂ | 60 à 65 % en poids |
| Na₂O | 14 à 18 % en poids |
| K₂O | 0,5 à 2 % en poids |
| CaO | 5 à 10 % en poids |
| MgO | 3 à 8 % en poids |
| Fe₂O₃ | < 0,1 % en poids |
| Al₂O₃ | 2,5 à 5 % en poids |
| B₂O₃ | 3 à 6 % en poids |
La composition totale correspondant à 100 % en poids.

7. Absorbant pour pétrole selon la revendication 6, caractérisé en ce que la laine de verre présente la composition ci-après :
| | |
|---|---|
| SiO₂ | 60 à 63 % en poids |
| Na₂O | 14 à 15 % en poids |
| K₂O | 1,6 à 2 % en poids |
| CaO | 7 à 10 % en poids |
| MgO | 5 à 8 % en poids |
| Fe₂O₃ | < 0,1 % en poids |
| Al₂O₃ | 2,5 à 3 % en poids |
| B₂O₃ | 3 à 4 % en poids |
La composition totale correspondant à 100 % en poids.

8. Absorbant pour pétrole selon l'une des revendications 1 à 7 , caractérisé en ce que le liant est un liant à base de résine phénolique.

9. Absorbant pour pétrole selon la revendication 8, caractérisé en ce que le liant est un liant à base de résine phénolique, avec des additifs constitués de silicones et de silanes.

10. Procédé de fabrication d'un absorbant pour pétrole constitué d'un matériau ayant une densité d'au moins 200 g par litre, constitué de flocons ou de granulé à base de laine minérale et de liant, caractérisé en ce que le procédé comprend les étapes de procédé ci-après :
a) fourniture de laine minérale, avec une composition de liant,
b) compactage de laine minérale pourvue de la composition de liant,
c) granulation ou floculation à partir de la laine minérale compactée, et
d) séchage du granulé ou des flocons.

11. Procédé de fabrication de pétrole selon la revendication 10, caractérisé en ce que la laine minérale est utilisée sous la forme de déchets de fibres humides.

12. Procédé de fabrication de pétrole selon la revendication 10 ou 11, caractérisé en ce que l'étape de fournir la laine minérale avec une composition en liant est effectuée par imprégnation de la laine minérale avec la composition de liant et le compactage de laine minérale pourvue de la composition en liant est effectué par compression dans une presse à vis, à la suite de quoi est conduite l'étape de procédés de granulation ou de floculation à partir de laine minérale compactée, au moyen de la presse à vis.

13. Procédé selon l'une des revendications 10 à 12, caractérisé en ce que le procédé comprend l'étape de procédé supplémentaire consistant à :
e) filtrer par tamisage le granulat ou les flocons, sur le critère d'une taille maximale de 4mm.

14. Procédé selon l'une des revendication 10 à 12, caractérisé en ce que dans l'étape de procédé a) la laine minérale est pourvue d'une solution de résine phénolique aqueuse faisant office de liant, qui contient le cas échéant des additifs constitués d'urée, sulfate d'ammonium, huile servant de liant à de la poussière, ammoniaque, amilopectine esther et tensio-actifs.

15. Procédé selon la revendication 14, caractérisé en ce que, à l'étape de procédé a), la laine minérale est pourvue d'une solution de résine phénolique aqueuse qui contient comme additifs des silicones et des silanes.

16. Procédé selon la revendication 14 ou la revendication 15, caractérisé en ce qu'elle est étape de procédé a), la laine minérale est pourvue d'une solution de résine phénolique aqueuse à raison de 2 % en poids.
